# EUROPEAN PATENT APPLICATION

(11) **EP 4 227 122 A1**
(43) Date of publication of application: **16.08.2023**
(21) Application number: 23156242.2
(22) Date of filing: 13.02.2023
(51) Int. Cl.: B60G 11/22, B62D 21/18, B62D 33/06, B60G 99/00

(54) **ARTICULATED LOADER**

(30) Priority: 14.02.2022 IT 202200002615
(71) Applicant: NEOMACH S.R.L., 35010 San Giorgio in Bosco (PD) (IT)
(72) Inventor: BARCHI, Massimo, SAN GIORGIO IN BOSCO (PD) (IT); CECCHINI, Alessandro, SAN MARINO (SM)
(74) Representative: Tiburzi, Andrea

(57) **Abstract**

The present invention relates to an improved articulated loader (M) comprising: a front frame (1), an elevator arm (2), coupled to said front frame (1), to perform operations; a rear frame (4) coupled to said front frame (1) by means of an articulation joint (11), a cockpit (3) for housing an operator and a plurality of control devices for said loader (M), said loader(M) further comprising a supporting and suspension system (5), and in that said cockpit (3) is coupled to said front frame (1) by means of said supporting and suspension system (5).

## Description

The present invention relates to an improved articulated loader for lifting and/or transporting material.

### Field of the invention

In more detail, the invention relates to a small articulated loader, indicated hereinafter as an articulated skid steer loader, designed and manufactured in particular for the building sector, for the agricultural sector, but which can be used for any sector in which the lifting and transporting the lifted load in different types of environments, or for other functions.

In the following, the description will be directed to an articulated skid steer loader for lifting and transporting material, but it is clear that the same should not be considered limited to this specific use.

### State of the art

As is well known, articulated skid steer loaders are currently mainly used in the construction and agricultural sectors, or in all sectors where it is necessary to work in spaces of a different nature, such as sports facilities, stadiums, golf or sports fields, cycle paths, green areas, public and private parks and gardens, warehouses, street cleaning, snow removal and the like.

Moni loaders of the known type comprise a self-supporting body, which rests on two front wheels and two rear wheels.

The self-supporting body comprises a front frame, a rear frame, a cockpit, and a lift loader or elevator arm.

The rear frame is connected to the two rear wheels.

The cockpit, the lifter, and the front frame are connected to each other and are in turn connected to the two front wheels.

In particular, the cockpit, or driving position, is connected to the front frame.

The front frame is connected to the rear frame by one or more articulation joints, so as to minimize the turning radius and give the skid steer loader greater handling agility, mainly in small working areas.

A drawback of the prior art is that all the vibrations generated during the movement and operation of the lifting loader are transmitted inside the working cabin; the vibrations also generate the emission of sound waves which are amplified by the windows of the cabin, thus causing considerable disturbance to the operator.

It is clear that the presence of vibrations in the driver's cabin is burdensome in terms of stresses transmitted to the operator, who finds himself operating in at least uncomfortable conditions.

Recently, to solve this problem, rubber anti-vibration systems have been used, placing them under the passenger compartment. However, this entails the need to provide a double structure, which causes high costs and bulk.

### Scope of the invention

Therefore, the technical problem posed and solved by the present invention is that of providing an articulated skid steer loader which makes it possible to overcome the drawbacks mentioned above with reference to the prior art.

In light of the above, it is therefore the object of the present invention to provide an articulated skid steer loader capable of increasing the driving comfort of the operator, by damping the vibrations transmitted by the lifting loader to the passenger compartment, in a compact articulated loader, where the driving compartment is anchored to the front frame of the loader itself, with very low production costs.

A further object of the present invention is to attenuate the emission of sound waves generated by vibrations so that they do not propagate in the passenger compartment occupied by the operator.

It is therefore specific object of the present invention an improved articulated loader comprising: a front frame, an elevator arm, coupled to said front frame, to perform operations; a rear frame coupled to said front frame by means of an articulation joint, a cockpit for housing an operator and a plurality of control devices for said loader, comprising a supporting and suspension system, and in that said cockpit is coupled to said front frame by means of said supporting and suspension system.

Further according to the invention, said supporting and suspension system comprises a first portion capable of supporting said cockpit, a second portion coupled to said first portion, and coupling means for coupling said first and second portion to said front frame.

Preferably according to the invention, said first portion lies on a first plane parallel to the ground, and said second portion lies on a second plane orthogonal to said first plane.

Still according to the invention, said coupling means comprise a plurality of anti-vibration elements.

Always according to the invention, said coupling means comprise a first anti-vibration element, a second anti-vibration element, a third anti-vibration element and a fourth anti-vibration element.

Further according to the invention, said first, second, third and fourth anti-vibration element are arranged in four coupling portions between said front frame and said supporting and suspension system.

Preferably according to the invention, said cockpit comprises a front portion and a rear portion, and said plurality of anti-vibration elements is arranged in correspondence with said front portion.

Still according to the invention, said first and second anti-vibration elements are arranged along a first development axis, and said third and fourth anti-vibration elements are arranged along a second development axis, orthogonal to said first development axis.

Always according to the invention, said articulated loader comprises a pair of front wheels, connected to said front frame.

Further according to the invention, said articulated loader comprises a pair of rear wheels, connected to said rear frame.

### Object of the invention

The present invention will be now described, for illustrative but not limitative purposes, according to its preferred embodiments, with particular reference to the figures of the enclosed drawings, wherein:

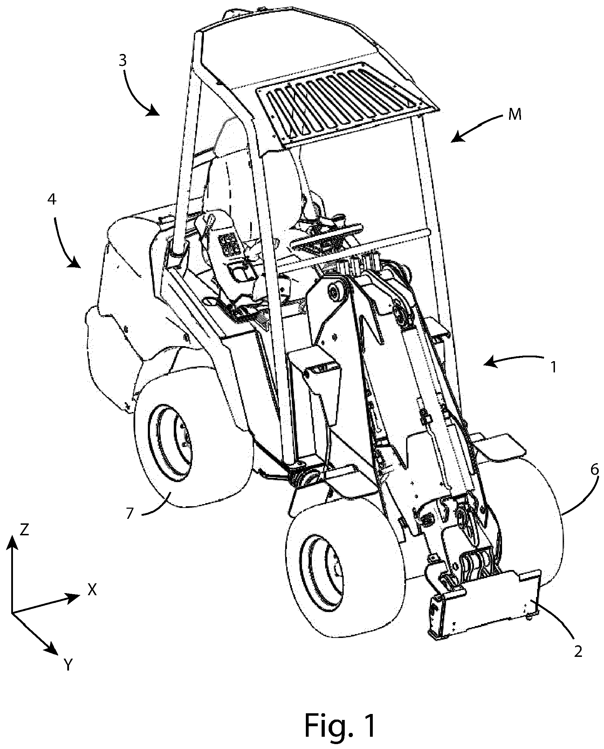

figure 1 shows a front perspective view of the improved articulated loader, object of the present invention;

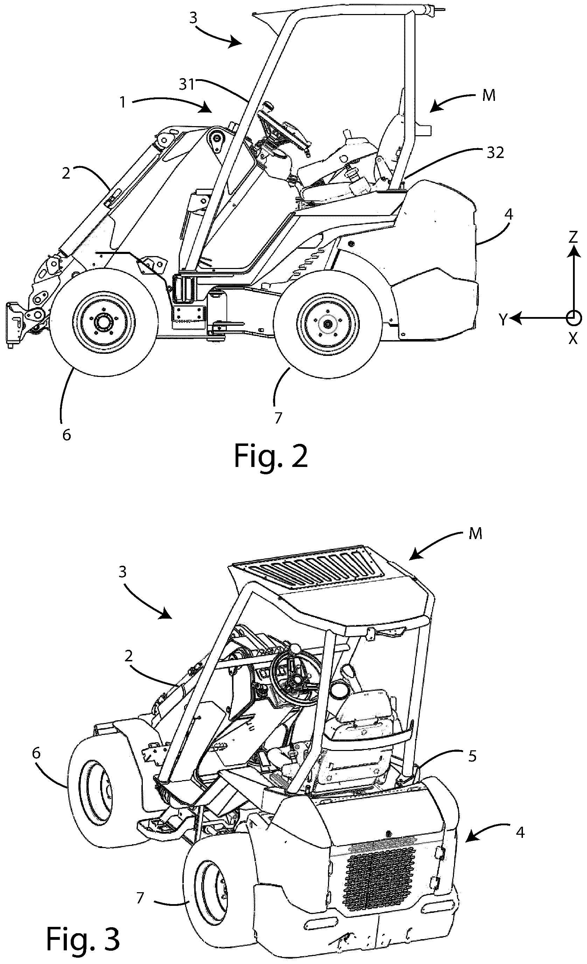

figure 2 shows a side view of the loader shown in figure 1;
figure 3 shows a rear perspective view of the loader shown in figure 1;
figure 4 shows a side perspective view of a portion of the loader shown in figure 1, and the relative constrain system between the front frame and the frame that supports the passenger cockpit;
figure 5 shows a side perspective view of a portion of the loader shown in figure 1, and the relative constrain system between the front frame and the frame that supports the passenger cockpit;
figure 6 shows a side perspective view of a portion of the loader shown in figure 1; and
figure 7 shows a rear perspective view of a portion of the loader shown in figure 1.

In the various figures, similar parts will be indicated with the same reference numbers.

With reference to the attached figures, the improved articulated loader M, object of the present invention, essentially comprises a front frame 1, a lifting loader or elevator arm 2, a passenger cockpit 3, a rear frame 4, a support and suspension system 5, a pair of front wheels 6 and a pair of rear wheels 7.

Said front frame 1, said elevator arm 2, and said passenger cockpit 3 are coupled together.

In particular, said elevator arm 2 is coupled to the front frame 1, and said cockpit 3 is coupled to said front frame 1.

Furthermore, said pair of front wheels 6 is connected to said front frame 1.

Considering a system of XYZ Cartesian axes as a reference, said passenger cockpit 3 develops mainly along a development axis parallel to the Z axis, orthogonal to the ground.

Said cockpit 3 is intended to house the operator and the control devices of the loader M.

In particular said passenger cockpit 3 comprises a seat for accommodating an operator, a cabin for protecting the operator from the external environment, one or more displays, one or more hydraulic joysticks, one or more electric switches, driving levers, steering wheel, pedals, and the like.

Said passenger cockpit 3 comprises a front portion 31, arranged close to said front frame 1, and a rear portion 32, arranged close to said rear frame 4.

Said elevator arm 2 is able to move mainly along said Z-axis from a first position, in which it is arranged substantially close to the ground, towards a second position, in which it is arranged in its maximum extension position and maximum distance with respect to the ground, passing through a plurality of positions in which said elevator arm 2 is placed at different distances from the ground along said Z-axis.

Said elevator arm 2 can also extend telescopically to reach remote points, so as to perform various operations.

Said pair of rear wheels 7 is connected to said rear frame 4.

Said rear frame 4 comprises the motor unit for supplying and operating the loader M.

Furthermore, said rear frame 4 ensures structural stability to said blade M, mainly when said front frame 1 is in motion.

Said front frame 1 and said rear frame 4 are connected to each other by means of an articulation joint 11, with respect to which said front frame 1 can rotate around said development Z-axis.

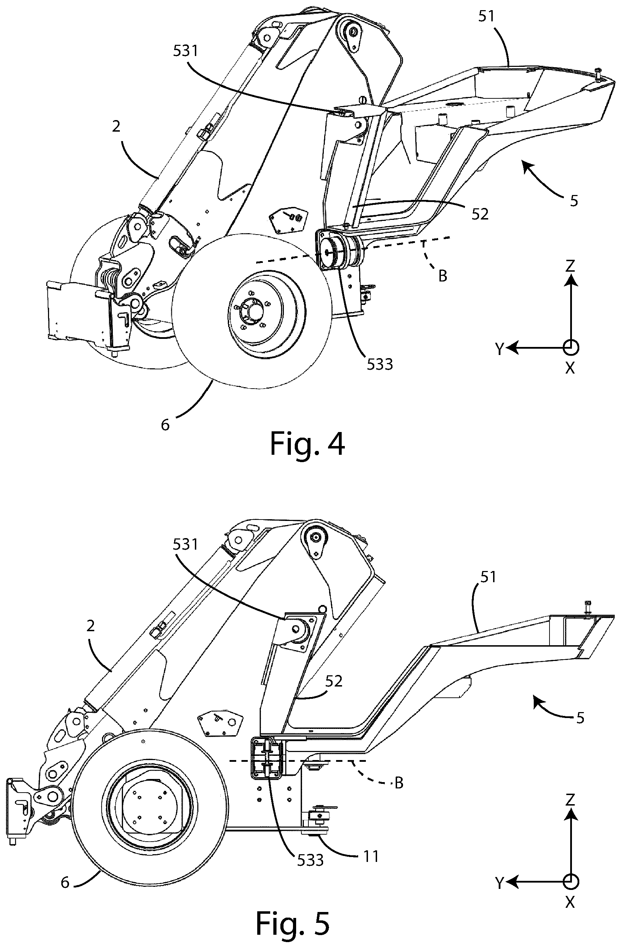

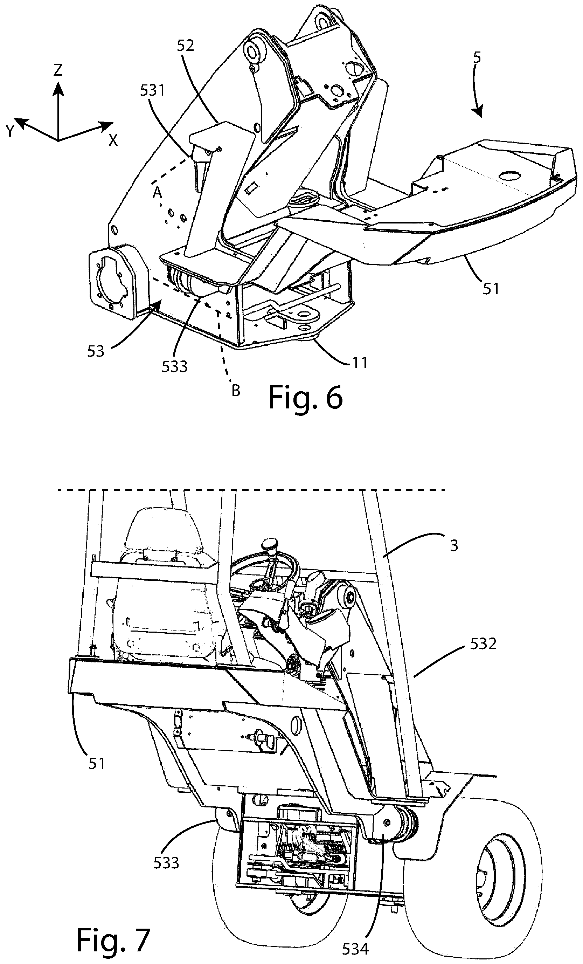

With reference now in particular to figures 4-7, said support and suspension system 5 comprises a first portion 51, a second portion 52, and coupling means 53.

Said first portion 51 lies in a first plane XY, parallel to the ground, and it is capable of supporting said passenger cockpit 3.

Said second portion 52 lies in a second plane XZ, arranged orthogonally to the ground, and it is fixed to said first portion 51.

Said support and suspension system 5 is coupled to said front frame 1 by means of said coupling means 53.

In particular, said coupling means 53 are arranged in predetermined positions of said support and suspension device 5 and of said front frame 1, and are capable of cantilevering said passenger cockpit 3.

In the embodiment described in the present invention, said coupling means 53 comprise a first 531, a second 532, a third 533, and a fourth 534 anti-vibration element.

Said anti-vibration elements 53 allow said passenger cockpit 3 to remain anchored to said front frame 1 of said blade M, damping the transmission of the vibrations induced by said front frame 1 towards the operator.

Said first 531, second 532, third 533, and fourth 534 anti-vibration element are arranged at the four corners of said second portion 52 of said support and suspension system 5, and are oriented so as to oppose their damping effect to the directions of the stress of the constituted load from the resultant of the weight of said passenger cockpit 3.

In particular, said first 531, second 532, third 533, and fourth 534 anti-vibration elements are arranged in correspondence with said front portion 31 of said passenger cockpit 3.

Said first said 531, second 532, third 533, and fourth 534 anti-vibration elements have a structure which develops along a development axis.

Said first 531 and second 532 anti-vibration elements develop along a first development A-axis, parallel to the X-axis of the reference system, therefore parallel to the ground.

Said third 533 and fourth 534 anti-vibration elements develop along a second development axis B, parallel to said Y-axis, therefore orthogonal to said first development axis A and also parallel to the ground.

Without departing from the scope of protection of the present invention, said coupling means 53 can be in different numbers, of different types, and be oriented in different directions on the basis of the type of loader M and therefore of the load constituted by the resultant weight of said passenger compartment 3.

The operation of the improved articulated loader M object of the present invention described above is as follows.

When an operator intends to use a loader M for construction or agricultural work or the like, s/he accesses said cockpit 3. By means of said control devices, s/he activates the operation of said elevator arm 2, from said first position to said second position and vice versa, to lift a load and carry it, or to perform other operations.

During the operation of said elevator arm 2, said front frame 1, said elevator arm 2, and said cockpit 3 rotate around said Z-axis, with respect to said rear frame 4, around said articulation joint 11.

Said first portion 51 supports said passenger cockpit 3, while said coupling means 53 attenuates the vibrations transmitted from said elevator arm 2 towards said front frame 1 up to said passenger cockpit 3.

As evident from the above description, said loader M allows the operator to be provided with high driving comfort, since the vibrations deriving from the operation of said elevator arm 2 are dampened by said support and suspension system 5, and the noise emissions generated by the vibrations are attenuated.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Improved articulated loader (M) comprising:
a front frame (1),
an elevator arm (2), coupled to said front frame (1), to perform operations;
a rear frame (4) coupled to said front frame (1) by means of an articulation joint (11),
a cockpit (3) for housing an operator and a plurality of control devices for said loader (M), said loader(M) being **characterized**
**in that** it comprises a supporting and suspension system (5), and
**in that** said cockpit (3) is coupled to said front frame (1) by means of said supporting and suspension system (5).

2. Loader (M) according to the preceding claim, **characterized in that** said supporting and suspension system (5) comprises:
a first portion (51) capable of supporting said cockpit (3),
a second portion (52) coupled to said first portion (51), and
coupling means (53) for coupling said first (51) and second (52) portion to said front frame (1).

3. Loader (M) according to the preceding claim, **characterized**
**in that** said first portion (51) lies on a first plane (XY) parallel to the ground, and
**in that** said second portion (52) lies on a second plane (XZ) orthogonal to said first plane (XY).

4. Loader (M) according to any one of the preceding claims 2 or 3, **characterized in that** said coupling means (53) comprise a plurality of anti-vibration elements (531, 532, 533, 534).

5. Loader (M) according to the preceding claim, **characterized in that** said coupling means (53) comprise a first anti-vibration element (531), a second anti-vibration element (532), a third anti-vibration element (533) and a fourth anti-vibration element (534).

6. Loader (M) according to the preceding claim, **characterized in that** said first (531), second (532), third (533) and fourth (534) anti-vibration element are arranged in four coupling portions between said front frame (1) and said supporting and suspension system (5).

7. Loader (M) according to any one of the claims 4-6, **characterized**
**in that** said cockpit (3) comprises a front portion (31) and a rear portion (32), and
**in that** said plurality of anti-vibration elements (531, 532, 533, 534) is arranged in correspondence with said front portion (31).

8. Loader (M) according to any one of the claims 5-7, **characterized**
**in that** said first (531) and second (532) anti-vibration elements are arranged along a first development axis (A), and
**in that** said third (533) and fourth (534) anti-vibration elements are arranged along a second development axis (B), orthogonal to said first development axis (A).

9. Loader (M) according to any one of the preceding claim, **characterized in that** it comprises a pair of front wheels (6), and
**in that** said pair of front wheels (6) is connected to said front frame (1).

10. Loader (M) according to any one of the preceding claim, **characterized in that** it comprises a pair of rear wheels (7), and
**in that** said pair of rear wheels (7) is connected to said rear frame (4).
